# EUROPÄISCHE PATENTSCHRIFT

(11) **EP 1 435 312 B1**
(45) Veröffentlichungstag und Bekanntmachung des Hinweises auf die Patenterteilung: **01.06.2005**
(21) Anmeldenummer: 02293277.6
(22) Anmeldetag: 30.12.2002
(51) Int. Cl.: B60R 16/02

(54) **Vorrichtung zur Stromversorgung eines elektrischen Verbrauchers in einem Kraftfahrzeug**
Current supply device of an electric consumer in a vehicle
Dispositif pour l'alimentation en courant d'un consommateur électrique dans un véhicule

(43) Veröffentlichungstag der Anmeldung: 07.07.2004
(73) Patentinhaber: Nexans, 75008 Paris (FR)
(72) Erfinder: Schröer, Frank, D-92637 Weiden (DE); Huscher, Rainer, D-95679 Waldershof (DE)
(74) Vertreter: Döring, Roger, Dipl.-Ing.

(56) Entgegenhaltungen:
- EP-A- 0 863 587
- US-A- 4 462 648
- US-A- 5 429 508

## Beschreibung

Die Erfindung bezieht sich auf eine Vorrichtung zur Stromversorgung eines elektrischen Verbrauchers in einem Kraftfahrzeug, das ein an einer Lenksäule drehbar angebrachtes Lenkrad hat, bei welcher der Verbraucher mit einer Spannungsquelle des Kraftfahrzeugs in einem Stromkreis liegt und mit dem Lenkrad desselben verbunden ist und bei welcher in den Stromkreis ein mit einem feststehenden Teil der Lenksäule einerseits und dem Lenkrad andererseits verbundener Verbinder eingeschaltet ist, der als Drehkörper mit mindestens einem Paar von einander zugeordneten metallischen Bauteilen ausgebildet ist, von denen eines um eine gemeinsame Achse drehbar ist und zwischen denen an beiden Bauteilen anliegende, drehbare Metallkörper angebracht sind, und bei dem eines der Bauteile mit dem feststehenden Teil der Lenksäule und das andere Bauteil mit dem Lenkrad verbunden ist (US 4 462 648 A).

Eine derartige Vorrichtung wird beispielsweise für die Übertragung von Strom zum Auslösen eines Prallschutzes in Kraftfahrzeugen eingesetzt, bei welchem im Lenkrad ein Luftsack, ein sogenannter "Airbag", angebracht ist. Sie kann aber beispielsweise auch für eine Schiebetürverkabelung oder eine Lenkgetriebeverkabelung in Kraftfahrzeugen verwendet werden. Die Vorrichtung verbindet dabei die feststehende Spannungsquelle eines Kraftfahrzeugs mit dem in zwei Richtungen drehbaren Lenkrad.

Bei der bekannten Vorrichtung nach der DE 199 60 205 A1 wird als Verbinder eine aus einem Stator und einem um eine gemeinsame Achse drehbaren Rotor bestehende Kassette - im folgenden als "Airbagkassette" bezeichnet - verwendet, in der eine mit dem Rotor einerseits und dem Stator andererseits verbundene, in Windungen verlaufende elektrische Leitung angebracht ist. Die Leitung kann mit dem Rotor der Airbagkassette, welcher am Lenkrad angebracht ist, den Drehbewegungen desselben störungsfrei folgen. Sie ist mit einer der Anzahl der an die Spannungsquelle anzuschließenden Verbraucher entsprechenden Anzahl von elektrischen Leitern ausgerüstet. Da für den Einbau einer solchen Airbagkassette in die Lenksäule eines Kraftfahrzeugs nur ein vorgegebener, relativ kleiner Raum zur Verfügung steht, ist die Anzahl der der Leiter einerseits durch die zulässige Breite der einzusetzenden Leitung und andererseits durch den jeweils benötigten leitenden Querschnitt der Leiter bestimmt. Wenn höhere Stromstärken übertragen werden sollen, muß die Anzahl der Leiter wegen der größeren Abmessungen derselben eingeschränkt werden. Es können dann möglicherweise nicht alle Verbraucher eines Kraftfahrzeugs durch eine solche Airbagkassette an die Spannungsquelle desselben angeschlossen werden.

Die bekannte Vorrichtung nach der eingangs erwähnten und gattungsbildenden US 4462648 A dient zur elektrischen Verbindung zwischen wenigstens zwei auf der Lenkradachse eines Kraftfahrzeugs befindlichen, drehbaren Bauteilen. Das sind beispielsweise ein chassisfestes Lagerteil und eine elektrische Zündeinrichtung eines am Lenkrad gelagerten, als Insassen-Aufprollschutz dienenden Luftsocks. Um eine gleichbleibend sichere elektrische Verbindung zwischen den gegeneinander verdrehbaren Bauteilen mit möglichst geringem Übergangswiderstand zu erreichen, sind für die elektrische Verbindung Wälzkörper aus elektrisch leitendem Material vorgesehen, die zwischen einem stationären Kontaktteil und einem drehbaren Kontaktteil, die gegeneinander verspannt sind, angeordnet sind.

Der Erfindung liegt die Aufgabe zugrunde, die eingangs geschilderte Vorrichtung so auszubilden, daß auch höhere Stromstärken übertragen werden können, ohne daß die Anzahl der mit der Spannungsquelle des Kraftfahrzeugs zu verbindenden Verbraucher eingeschränkt werden muß.

Diese Aufgabe wird gemäß der Erfindung dadurch gelöst, daß die Vorrichtung einen weiteren in der Lenksäule befindlichen, der Signal- und/oder Stromübertragung dienenden Drehverbinder (3) aufweist, und daß der Drehkörper in diesen Drehverbinder angebracht ist, der einen mit einem feststehenden Teil der Lenksäule verbundenen Stator und einen mit dem Lenkrad verbundenen Rotor aufweist, zwischen denen eine in Windungen verlaufende elektrische Leitung angeordnet ist.

Diese Vorrichtung ist insbesondere für alle Verbraucher eines Kraftfahrzeugs verwendbar, für deren Stromversorgung höhere Stromstärken benötigt werden. Ein solcher Verbraucher ist beispielsweise eine Lenkradheizung, die bei komfortableren Personenkraftwagen inzwischen Standard ist. Die erhöhten Übergangswiderstände des bei dieser Vorrichtung verwendeten Drehkörpers machen sich wegen der erhöhten Stromstärke nicht störend bemerkbar. Die Vorrichtung ist mit einem Drehverbinder - der weiter oben beschriebenen "Airbagkassette" - verbunden und zusammen mit demselben in eine Lenksäule eines Kraftfahrzeugs eingebaut. Das ist wegen ihres geringen Platzbedarfs jederzeit möglich. Dabei ist es beispielsweise möglich, den Drehkörper in einer zentralen Bohrung des Drehverbinders zu positionieren. Er ist dann ohne erhöhten Platzbedarf in der Lenksäule untergebracht und kann zusätzlich als Drehlager verwendet werden.

Zweckmäßig wird in der Vorrichtung ein aus zwei gegeneinander isolierten Drehteilen bestehender Drehkörper verwendet, die an unterschiedliche Polaritäten der Spannungsquelle angeschlossen sind.

Ausführungsbeispiele des Erfindungsgegenstandes sind in den Zeichnungen dargestellt.

Es zeigen:
Fig.1 schematisch das Ende einer Lenksäule eines Kraftfahrzeugs mit Lenkrad.
Fig. 2 einen Stromkreis mit darin angeschlossener Vorrichtung nach der Erfindung.
Fig. 3 eine Einzelheit von Fig. 2 in ergänzter Ausführung.
Fig. 4 und 5 unterschiedliche Ausführungen der Vorrichtung nach der Erfindung in vergrößerten Darstellungen.

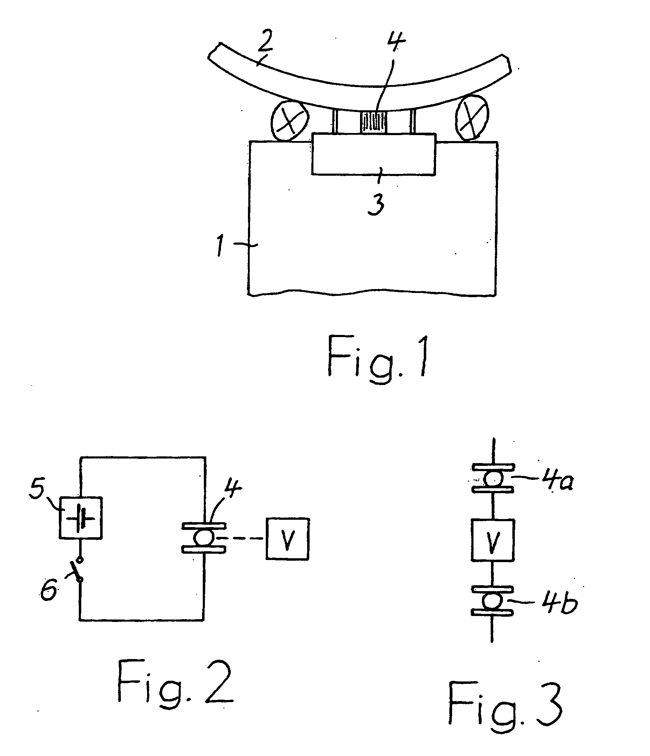

Die Darstellung in Fig. 1 ist sehr vereinfacht. Sie soll nur einen prinzipiellen Aufbau wiedergeben. Am Ende einer nur schematisch angedeuteten Lenksäule 1 eines Kraftfahrzeugs ist ein ebenfalls nur schematisch angedeutetes Lenkrad 2 drehbar gelagert. In der Lenksäule 1 sind ein Drehverbinder 3-in folgenden Airbag kassette 3 genannt-und ein Drehkörper 4 montiert, die beide einerseits mit der Lenksäule 1 und andererseits mit dem Lenkrad 2 verbunden sind. Die Airbagkassette 3 ist prinzipiell bekannt und beispielsweise in der weiter oben erwähnten DE 199 60 205 A1 beschrieben. Der Drehkörper 4 dient neben der Airbagkassette 3 als gesonderte Einheit zur Stromübertragung, insbesondere an Verbraucher mit erhöhtem Strombedarf.

Der Drehkörper 4 liegt im Stromkreis einer Spannungsquelle 5, bei der es sich beispielsweise um die Batterie des Kraftfahrzeugs handelt. Der Stromkreis kann durch einen Schalter 6 geschlossen und wieder geöffnet werden. An den Drehkörper 4 ist ein Verbraucher V angeschlossen, der mechanisch mit dem Lenkrad 2 verbunden ist. Bei dem Verbraucher V handelt es sich in bevorzugter Ausführungsform um eine elektrische Heizung für das Lenkrad 2. Sie besteht beispielsweise aus um das Lenkrad 2 herumgewickelten, isolierten Heizdrähten.

Wenn der Verbraucher V nicht mit Masse verbunden wird, kann zweckmäßig ein Drehkörper 4 eingesetzt werden, der aus zwei gegeneinander isolierten Drehteilen 4a und 4b besteht, zwischen denen gemäß Fig. 3 der Verbraucher V angeschlossen ist und die mit unterschiedlichen Polen der Spannungsquelle 5 verbunden sind.

Der Drehkörper 4 kann grundsätzlich als an sich bekanntes Kugellager oder Wälzlager ausgeführt sein. Seine metallischen Bauteile sind dann zwei konzentrische Metallringe, zwischen denen drehbare Metallkörper angebracht sind, also Kugeln oder Rollen bzw. Nadeln. Der Drehkörper 4 kann aber auch anders aufgebaut sein, mit einem feststehenden und einem drehbaren Bauteil, zwischen denen drehbare Metallkörper angebracht sind. Dabei muß nur sichergestellt sein, daß stets mindestens ein Metallkörper beide Bauteile berührt. Der Drehkörper 4 ist an der Airbagkassette 3 angebracht und zusammen mit derselben in der Lenksäule 1 montiert.

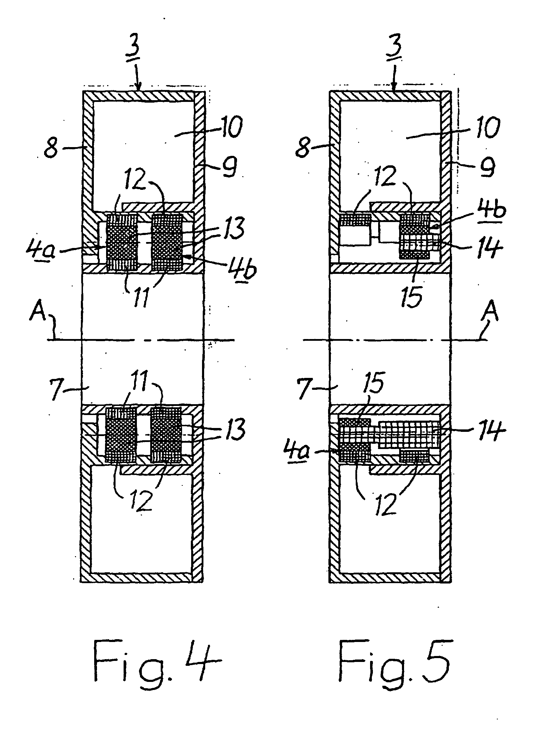

Bei der Ausführungsform der Vorrichtung nach Fig. 4 ist ein Drehkörper 4 verwendet, der aus zwei gegeneinander isolierten Drehteilen 4a und 4b besteht, die mit der Airbagkassette 3 sind. Sie werden in Montageposition gemäß Fig. 3 mit je einem Pol der Spannungsquelle 5 verbunden. Die Drehteile 4a und 4b können dabei ohne zusätzlichen Platzbedarf in einer zentralen Bohrung 7 der Airbagkassette 3 angebracht sein, so wie es in Fig. 4 dargestellt ist. Die Airbagkassette 3 hat einen mit der Lenksäule 1 verbundenen Stator 8 und einen mit dem Lenkrad 2 verbundenen Rotor 9, der relativ zum Stator 8 um eine gemeinsame Achse A drehbar ist. Stator 8 und Rotor 9 schließen einen Ringraum 10 zwischen sich ein, in dem eine in Windungen verlaufende, nicht mit dargestellte elektrische Leitung angeordnet sein kann.

Jedes Drehteil 4a und 4b hat zwei konzentrisch zueinander angeordnete Metallringe 11 und 12, zwischen denen um sich selbst drehbare Metallkörper, beispielsweise Rollen 13, angeordnet sind. Die Metallringe 11 sind mit dem Rotor 9 der Airbagkassette 3 und die Metallringe 12 mit deren Stator 8 verbunden. Im montierten Zustand sind die Metallringe 12 beispielsweise mit der Spannungsquelle 5 verbunden, während der Verbraucher V an die Metallringe 11 angeschlossen ist. Der Stromkreis wird durch die Rollen 13 geschlossen. Der Verbraucher V wird dadurch bei geschlossenem Stromkreis in jeder Stellung des Lenkrades 2 mit Strom versorgt.

Der Drehkörper 4 kann in einer anderen Ausführungsform auch gemäß Fig. 5 aufgebaut sein. Analog zu Fig. 4 sind gemäß Fig. 5 wieder zwei gegeneinander isolierte Drehteile 4a und 4b in eine Airbagkassette 3 eingebaut. Beide Drehteile 4a und 4b haben wieder einen mit dem Stator 8 der Airbagkassette 3 verbundenen Metallring 12. Statt des Metallrings 11 der Ausführungsform nach Fig. 4 ist hier jeweils mindestens ein aus gut leitendem Metall bestehender zylindrischer Bolzen 14 innerhalb des Metallrings 12 angebracht, der sich in Richtung der Achse des Metallrings 12 bzw. der Airbagkassette 3 erstreckt. Die Bolzen 14 sind am Rotor 9 der Airbagkassette 3 angebracht. Als drehbarer Metallkörper ist auf den Bolzen 14 jeweils eine metallische Hülse 15 drehbar gelagert, die am zugehörigen Metallring 12 anliegt und vom jeweiligen Bolzen 14 an denselben angedrückt wird. Bei einer Drehung des Lenkrades 2 und damit des Rotors 9 der Airbagkassette 3 rollen die Hülsen 15 jeweils auf den Metallringen 12 ab. Dabei drehen sie sich um die Bolzen 14.

Die Bolzen 14 können entsprechend der zeichnerischen Darstellung massiv ausgeführt sein. Sie können aber auch als Rohrstücke ausgebildet sein. Da die Drehteile 4a und 4b zur gegenseitigen Isolierung in axialer Richtung voneinander getrennt sind, haben sie unterschiedliche Abstände vom Rotor 9 der Airbagkassette 3. Die Bolzen 14 haben dementsprechend gemäß Fig. 5 oben einerseits und unten andererseits unterschiedliche axiale Längen. Pro Drehteil 4a und 4b ist mindestens ein Bolzen 14 mit Hülse 15 vorgesehen. Es können aber jeweils auch zwei oder mehr, in Umfangsrichtung gegeneinander versetzte Bolzen 14 mit Hülsen 15 am Rotor 9 der Airbagkassette 3 angebracht sein.

Auch bei der Ausführungsform nach Fig. 5 ist der Verbraucher V in jeder Stellung des Lenkrades 2 mit der Spannungsquelle 5 verbunden.

## Patentansprüche

1. Vorrichtung zur Stromversorgung eines elektrischen Verbrauchers (V) in einem Kraftfahrzeug, das ein an einer Lenksäule (1) drehbar angebrachtes Lenkrad (2) hat, bei welcher der Verbraucher (V) mit einer Spannungsquelle (5) des Kraftfahrzeugs in einem Stromkreis liegt und mit dem Lenkrad (2) desselben verbunden ist und bei welcher in den Stromkreis ein mit einem feststehenden Teil der Lenksäule (1) einerseits und dem Lenkrad (2) andererseits verbundener Verbinder eingeschaltet ist, der als Drehkörper (4) mit mindestens einem Paar von einander zugeordneten metallischen Bauteilen (11,12) ausgebildet ist, von denen eines um eine gemeinsame Achse drehbar ist und zwischen denen an beiden Bauteilen (11,12) anliegende, drehbare Metallkörper (13) angebracht sind, und bei dem eines der Bauteile mit dem feststehenden Teil der Lenksäule (1) und das andere Bauteil mit dem Lenkrad (2) verbunden ist, **dadurch gekennzeichnet, daß** die Vorrichtung einen weiteren in der Lenksäule (1) befindlichen, der Signal- und/oder Stromübertragung dienenden Drehverbinder (3) aufweist, und daß der Drehkörper (4) in diesem Drehverbinder (3) angebracht ist, der einen mit einem feststehenden Teil der Lenksäule (1) verbundenen Stator (8) und einen mit dem Lenkrad (2) verbundenen Rotor (9) aufweist, zwischen denen eine in Windungen verlaufende elektrische Leitung angeordnet ist.

2. Vorrichtung nach Anspruch 1, **dadurch gekennzeichnet, daß** der Drehkörper (4) in einer zentralen Bohrung (7) des Drehverbinders (3) angeordnet ist.

3. Vorrichtung nach Anspruch 1 oder 2, **dadurch gekennzeichnet,**
- **daß** eines der Bauteile des Drehkörpers (4) ein mit dem Stator (8) des Drehverbinders (3) verbundener Metallring (12) und das andere Bauteil mindestens ein innerhalb des Metaltrings (12) angeordneter und sich parallel zur Achse desselben erstreckender, zylindrischer Bolzen (14) ist, der mit dem Rotor (9) des Drehverbinders (3) verbunden ist, und
- daß auf dem Bolzen (14) eine am Metallring (12) anliegende metallische Hülse (15) drehbar gelagert ist.

4. Vorrichtung nach einem der Ansprüche 1 bis 3, **dadurch gekennzeichnet, daß** der Drehkörper (4) aus zwei konzentrisch zueinander angeordneten Metallringen (11,12) besteht, zwischen denen die drehbaren Metallkörper (13) angebracht sind.

5. Vorrichtung nach Anspruch 4, **dadurch gekennzeichnet, daß** die Metallkörper (13) Kugeln sind.

6. Vorrichtung nach Anspruch 4, **dadurch gekennzeichnet, daß** die Metallkörper (13) Rollen bzw. Nadeln sind.

7. Vorrichtung nach einem der Ansprüche 1 bis 6. **dadurch gekennzeichnet, daß** der Drehkörper (4) aus zwei gegeneinander isolierten Drehteilen (4a,4b) aus Paaren metallischer Bauteile besteht, die an unterschiedliche Polaritäten der Spannungsquelle (5) angeschlossen sind.

## Claims

1. A device for the current supply of an electrical load (V) of a motor car, having a steering wheel (2) which is fastened rotatably to a steering column (1), the load (V) being connected to the steering wheel (2) and lying in a current circuit together with a voltage source (5) of the motor car, in which device a connector is switched in the current circuit which is connected on the one hand to firm part of the steering column (1) and to the steering wheel (2) on the other hand, the connector being a rotatable element (4) with at least one pair of metallic components (11,12) from which one is rotatable around a common axis and between which rotatable metallic bodies (13) are positioned which touch both metallic components (11,12), and in which device one of the components is connected to the firm part of the steering column (1) and the other one to the steering wheel (2), **characterized in that** the device comprises an additional rotatable connector (3) which is mounted within the steering column (1) and serves for the transmission of signals and/or electric current, and that the rotatable element (4) is mounted within the rotatable connector (3), which comprises a stator (8) connected to a firm part of the steering column (1) and a rotor (8) connected to the steering wheel (2), between which an electrical line is positioned which runs in turns.

2. A device according to claim 1, **characterized in that** the rotatable element (4) is mounted within a central throughhole (7) of the rotatable connector (3).

3. A device according to claim 1 or 2, **characterized in**
- **that** one of the components of the rotatable element (4) is a metallic ring (12) which is connected to the stator (8) of the rotatable connector (3) and the other component of the rotatable element (4) is at least one cylindrical bolt (14) which is positioned within the metallic ring (12) and runs in parallel to the axis of the same and is connected to the rotor (9) of the rotatable connector (3), and
- **that** a metallic socket (15) rotatably is mounted on the bolt (14) which touches the metallic ring (12).

4. A device according to one of the claims 1 to 3, **characterized in that** the rotatable element (4) comprises two concentric metallic rings (11,12) between which the rotatable metallic bodies (13) are positioned.

5. A device according to claim 4, **characterized in that** the metallic bodies (13) are spheres.

6. A device according to claim 4, **characterized in that** the metallic bodies (13) are rollers or needles.

7. A device according to one of the claims 1 to 6, **characterized in that** the rotatable element (4) comprises two rotorparts (4a,4b) which are isolated against each other and are made from pairs of metallic components, and which are connected to different polarities of the voltage source (5).

## Revendications

1. Dispositif d'alimentation électrique d'un consommateur électrique (V) dans un véhicule à moteur possédant un volant de direction (2) placé de manière orientable sur une colonne de direction (1), où le consommateur (V) se trouve dans un circuit électrique avec une source de tension (5) du véhicule à moteur et est relié au volant de direction (2) de celui-ci et où, dans le circuit électrique, un connecteur est intercalé et relié, d'une part, à une partie fixe de la colonne de direction (1) et, d'autre part, au volant de direction (2), ledit connecteur ayant la forme d'un corps rotatif (4) avec au moins une paire de composants métalliques (11, 12) conjugués, dont l'un peut tourner autour d'un axe commun et entre lesquels sont disposés des éléments métalliques (13) rotatifs de façon à être en contact avec les deux composants (11, 12) et où l'un des composants est relié à la partie fixe de la colonne de direction (1) et l'autre au volant de direction (2), **caractérisé en ce que** le dispositif comporte un autre connecteur rotatif (3) situé dans la colonne de direction (1) et servant à la transmission de signaux et/ou de courant, et le corps rotatif (4) est monté dans ce connecteur rotatif (3) qui comporte un stator (8) relié avec la partie fixe de la colonne de direction (1) et un rotor (9) relié au volant de direction (2), entre lesquels est placé un câble électrique présentant des spires.

2. Dispositif selon la revendication 1, **caractérisé en ce que** le corps rotatif (4) est monté dans un alésage central (7) du raccord rotatif (3).

3. Dispositif selon la revendication 1 ou 2, **caractérisé en ce que**
- l'un des composants du corps rotatif (4) est une bague métallique (12) reliée au stator (8) du raccord rotatif (3) et que l'autre composant est au moins un axe cylindrique (14) placé à l'intérieur de la bague métallique (12) et s'étendant parallèlement à l'axe de celle-ci en étant relié au rotor (9) du raccord rotatif (3) et
- sur l'axe (14), une douille métallique (15) est disposée de façon mobile, en étant en contact avec la bague métallique (12).

4. Dispositif selon l'une des revendications 1 à 3, **caractérisé en ce que** le corps rotatif (4) est composé de deux bagues métalliques (11,12) concentriques entre elles, entre lesquelles sont placés les corps métalliques (13) mobiles.

5. Dispositif selon la revendication 4, **caractérisé en ce que** les corps métalliques (13) sont des billes.

6. Dispositif selon la revendication 4, **caractérisé en ce que** les corps métalliques (13) sont des rouleaux ou des aiguilles.

7. Dispositif selon l'une des revendications 1 à 6, **caractérisé en ce que** le corps rotatif (4) est composé de deux éléments rotatifs (4a,4b), isolés entre eux, de paires de composants métalliques et raccordés à différentes polarités de la source de tension (5).
